# EUROPEAN PATENT SPECIFICATION

(11) **EP 1 362 752 B1**
(45) Date of publication and mention of the grant of the patent: **14.06.2006**
(21) Application number: 03253037.0
(22) Date of filing: 15.05.2003
(51) Int. Cl.: B60R 22/48

(54) **Seat belt fastening reminder apparatus and the method thereof**
Erinnerungsvorrichtung für die Befestigung eines Sicherheitsgurtes und zugehöriges Verfahren
Dispositif de rappel pour la fixation d'une ceinture de sécurité et méthode correspondante

(30) Priority: 15.05.2002 JP 2002139995
(43) Date of publication of application: 19.11.2003
(73) Proprietor: YAZAKI CORPORATION, Minato-ku, Tokyo (JP); FUJI JUKOGYO KABUSHIKI KAISHA, Tokyo (JP)
(72) Inventor: Iwanabe, Takeshi, Haibara-cho, Haibara-gun, Shizuoka (JP); Michishige, Tatsuya, Shinjuku-ku, Tokyo (JP)
(74) Representative: Brunner, Michael John

(56) References cited:
- US-B1- 6 278 358
- US-B1- 6 362 734

## Description

The present invention relates to a method for reminding a seat belt fastening and a seat belt reminder apparatus in which an alarm is given for non-fastening of a seat belt of a vehicle by a warning lamp or a buzzer.

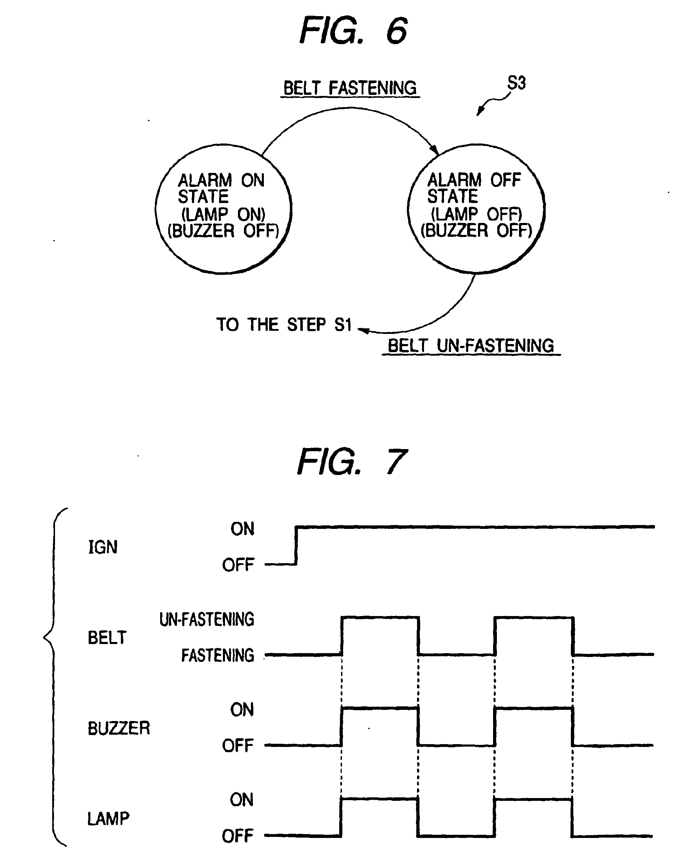

Recently, an apparatus called a seat belt reminder for giving an alarm for non-fastening of the seat belt by the lamp or the buzzer has been proposed. As shown in Fig. 7, this kind of the seat belt reminder apparatus detects a state of a seat belt switch when an ignition switch is on, and if the seat belt is in a unfastening state, the buzzer for warning and the lamp are actuated at timings shown by ON in the drawing. By this, the buzzer sound is emitted and the lamp is turned on, and the alarm for non-fastening of the belt is given.

Besides, in order to avoid unnecessary alarm like European vehicle evaluation standards, a seat belt reminder method and apparatus is also proposed in which not only the above state of the seat belt switch but also vehicle speed information is taken into consideration, plural stages such as a low alarm stage and a high alarm stage are provided, and more variety alarm output control corresponding to the respective stages is performed.

However, in such a seat belt reminder method and apparatus as mentioned above in which the plural stages are provided for the alarm, although the driving control of a buzzer and a lamp at the time when a transition occurs from the low alarm stage to the high alarm stage satisfies practicality, it can not be neceessary that the driving control of the buzzer and the lamp at every time when the transition occurs from the high alarm stage to the low alarm stage satisfies the practicality.

For example, in the seat belt reminder method and apparatus in which the low alarm stage and the high alarm stage are fixed by a predetermined vehicle speed, and different alarms are outputted correspondingly to the respective stages, in the case of travelling at a speed in the vicinity of the vehicle speed as the reference, each time it exceeds or falls below the vehicle speed as the reference, a changeover between alarms correspondingly to the low alarm stage and the high alarm stage is carried out, and it is expected that an uncomfortable feeling is given to a driver and other passengers. Especially, in the case where the buzzer is not used in the low alarm stage, and the buzzer is used in the high alarm stage, each time the stage is changed, an intermittent buzzer sound is outputted, and the uncomfortable feeling is given to the driver.

It is therefore an object of the present invention to provide a method for reminding a seat belt fastening and a seat belt reminder apparatus in which an alarm stage is divided into parts (or segments) and a vehicle speed as a reference, and different alarms are outputted correspondingly to respective stages, and an uncomfortable feeling due to an intermittent alarm sound is suppressed and practicability is improved.

US 6278358 discloses a method for reminding of seat belt fastening, comprising the steps of:
providing an audible alarm unit and a visible alarm unit;
detecting either vehicle speed or travelling distance and time;
setting a low alarm stage when only the visible alarm unit is actuated after an engine start and a high alarm stage when at least the audible alarm unit is actuated;
actuating at least either one of the audible alarm unit or the visible alarm unit in accordance with the alarm stages; and
changing from the low alarm stage to the high alarm stage when a vehicle speed reaches a predetermined vehicle speed in the low alarm stage.

According to the present invention, such a method is characterised by the step of
converting the high alarm stage to the low alarm stage only in the case that the seat belt is in a non-fastening state when the vehicle speed becomes less than the predetermined vehicle speed in the high alarm stage.

In the above configuration, only the visible alarm unit is driven in the low alarm stage from the engine start to the previously determined predetermined vehicle speed, and the audible alarm unit is driven in the high alarm stage at the time when the vehicle speed reaches the predetermined vehicle speed in the low alarm stage so that the alarm is given for the unfastening of the seat belt at higher alarm level than that of the low alarm stage. Accordingly, since the audible alarm is not given at a belt fastening needless time, such as a halting time of the vehicle, an uncomfortable feeling is not given to a user. Besides, at the time of a low driving speed before the vehicle speed reaches the predetermined vehicle speed, the minimum alarm is given by only the visible alarm, and when it reaches the predetermined vehicle speed and a degree of a danger is increased, the alarm is certainly given by the audible alarm. Further, the transition from the high alarm stage to the low alarm stage is made to occur only in the case where the seat belt is in the non-fastening state in the high alarm stage and at the time when the vehicle speed becomes less than the predetermined vehicle speed, and when the seat belt is fastened in any of the low alarm stage and the high alarm stage, an actuation of both the audible alarm unit and the visible alarm unit is stopped. Accordingly, in the case of traveling at a speed in the vicinity of the predetermined vehicle speed, the occurrence of a situation is prevented in which each time it exceeds or falls below the vehicle speed, the alarm is changed to one corresponding to the low alarm stage or the high alarm stage, and the alarm in the high alarm stage becomes intermittent. As the result, according to the present invention, an uncomfortable feeling is not given to a driver, and a correct alarm corresponding to an exact situation can be certainly given.

Preferably, both the audible alarm unit and the visible alarm unit are driven (or actuated) in the high alarm stage.

In the above configuration, the alarm in the high alarm stage is given more certainly. As the result, according to the present invention, the uncomfortable feeling is not given to the driver, and the alarm corresponding to the situation can be more certainly given.

Here, it is preferable that, the audible alarm unit and the visible alarm unit are driven synchronously in the high alarm stage.

In the above configuration, the alarm in the high alarm stage is given more certainly. As the result, according to the present invention, the uncomfortable feeling is not given to the driver, and the alarm corresponding to the situation can be more certainly given.

Here, it is preferable that, the visible alarm unit is actuated in the low alarm stage. The high alarm stage includes a first high alarm stage and a second high alarm stage. The low alarm stage changes to the first high alarm stage in which the visible alarm unit is turned on and off at a first period when the vehicle speed exceeds the predetermined vehicle speed in the low alarm stage. The first high alarm stage changes to the second high alarm stage in which the visible alarm unit is turned on and off at a second period shorter than the first period when a predetermined time is passed.

In the above configuration, as the degree of the danger increases, the alarm is gradually enhanced, and the alarm can be certainly given without giving the uncomfortable feeling to the driver or the passenger.

Preferably, the visible alarm unit is a warning lamp, and the audible alarm unit is a buzzer.

According to the present invention, there is also provided a seat belt reminder apparatus, comprising:
an alarm information detector for detecting either vehicle speed or travelling distance and time;
a setting unit for setting a plurality of alarm stages on the basis of an alarm information detected by the alarm information detector; and
an alarm unit having an audible alarm unit and a visible alarm unit for driving at least either one of the audible alarm unit or the visible alarm unit in accordance with the alarm stages;
wherein the setting unit sets a low alarm stage when only the visible alarm unit is actuated after an engine start and a high alarm stage when at least the audible alarm unit is actuated; and
wherein the low alarm stage changes to the high alarm stage when the vehicle speed reaches a predetermined vehicle speed in the low alarm stage; and characterised in that
the high alarm stage changes to the low alarm stage only in the case that the seat belt is in the non-fastening state when the vehicle speed becomes less than the predetermined vehicle speed in the high alarm stage.

In the above configuration, only to the visible alarm unit is actuated in the low alarm stage from the engine start to the predetermined vehicle speed, and in the high alarm stage at the time when the vehicle speed reaches the predetermined vehicle speed in the low alarm stage, the audible alarm unit is actuated so that the alarm is given for the non-fastening of the seat belt at an alarm level higher than the low alarm stage. Accordingly, since the audible alarm is not given at the belt fastening needless time, such as the halting time of the vehicle, the uncomfortable feeling is not given to the user. Besides, the minimum alarm is given by only the visible alarm at a low speed driving condition before reaching the predetermined vehicle speed, and when the vehicle sped reaches the predetermined vehicle speed and the degree of the danger is increased, the alarm is certainly given by the audible alarm. Further, the transition from the high alarm stage to the low alarms stage is made to occur only in the case where the seat belt is in the non-fastening state at the time when the vehicle speed becomes less than the predetermined vehicle speed in the high alarm stage, and when the seat belt is fastened in any of the low alarm stage and the high alarm stage, actuations of both the audible alarm stage and the visible alarm stage is stopped. Accordingly, in the case of traveling at the speed in the vicinity of the predetermined vehicle speed, the occurrence of a situation is prevented in which each time it exceeds or falls below this vehicle speed, the alarm is changed to one corresponding to the low alarm stage or the high alarm stage, and the alarm in the high alarm stage becomes intermittent.

Preferably, the audible alarm unit and the visible alarm unit are actuated synchronously in the high alarm stage.

In the above configuration, since the audible alarm unit and the visible alarm unit are synchronized and are actuated, the alarm in the high alarm stage is given more certainly.

The above objects and advantages of the present invention will become understood by describing in detail preferred exemplary embodiments thereof with reference to the accompanying drawings, wherein:
Fig. 1 is a block diagram showing a basic structure of a seat belt reminder apparatus according to an embodiment of the present invention (and a peripheral part of this apparatus);
Fig. 2 is a timing chart showing basic stage transitions and alarm operations performed at respective alarm stages according to the embodiment of the present invention;
Fig. 3 is a state transition diagram for explaining the respective alarm stages and the state transitions between the respective stages according to the embodiment of the present invention;
Fig. 4 is the state transition diagram of an alarm operation in a first stage;
Fig. 5 is the state transition diagram of the alarm operation in a second stage.
Fig. 6 is the state transition diagram of the alarm operation at a third stage; and
Fig. 7 is a time chart showing an alarm operation of a related seat belt reminder according to a prior art.

Hereinafter, embodiments of the present invention will be described with reference to the drawings.

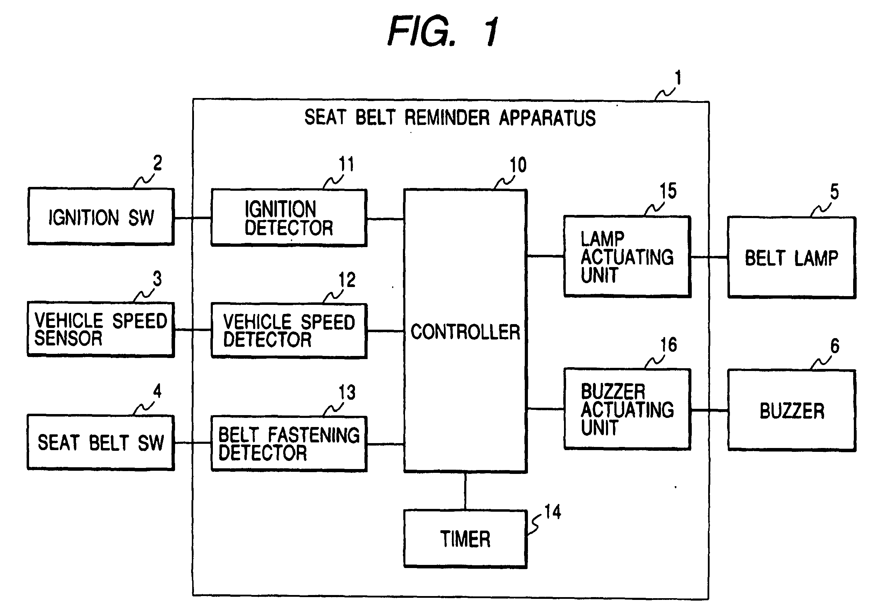

Fig. 1 is a block diagram showing a basic structure of a seat belt reminder apparatus according to an embodiment of the invention and a peripheral part of the apparatus. In Fig. 1, a seat belt reminder apparatus 1 is connected to an ignition switch 2, a vehicle speed sensor 3, a seat belt switch 4, a belt lamp 5 and a buzzer 6.

The seat belt reminder apparatus 1 includes a controller 10 made of a microcomputer, and drives the belt lamp 5 and the buzzer 6 on the basis of information supplied from the ignition switch 2, the vehicle speed sensor 3, and the seat belt switch 4, that is, on the basis of vehicle speed information at the time of unfastening of a seat belt to give an alarm for the unfastening of the seat belt. The seat belt reminder apparatus 1 includes, in addition to the controller 10, an ignition detector 11, a vehicle speed detector 12, a belt fastening detector 13, a timer 14, a lamp driving unit 15 and a buzzer driving unit 16. The ignition detector 11 receives an ignition ON or OFF signal from the ignition switch 2 and supplies thereof to the controller 10. The vehicle speed detector 12 receives a pulse signal corresponding to a vehicle speed from the vehicle speed sensor 3 and supplies thereof to the controller 10. Besides, the belt fastening detector 13 receives an electric signal indicating fastening or unfastening of the seat belt and supplies thereof to the controller 10. Although these detectors 11, 12 and 13 include interface circuits for converting the respective signals from the ignition switch 2, the vehicle sensor 3 and the seat belt switch 4 into voltages suitable for the controller 10 made of the microcomputer, these may be functionally incorporated in the controller 10.

The timer 14 provides a timer information for judging later-mentioned alarm stages, and includes at least a 90 second timer. The lamp driving unit 15 and the buzzer driving unit 16 include driving circuits for driving the belt lamp 5 and the buzzer 6 on the basis of instructions from the controller 10, respectively.

The ignition switch 2 is used for judging vehicle operating conditions, and when the switch is turned on, it is judged that the vehicle is in the operating condition. The vehicle speed sensor 3 detects a vehicle speed, and outputs a pulse signal with a period corresponding to the vehicle speed. The output becomes one of plural series of informations for judging the later-mentioned alarm stages. The seat belt switch 4 outputs the electric signal indicating the fastening or unfastening of the seat belt to the seat belt reminder apparatus 1 on the basis of whether or not for example, at least a buckle attached to the seat belt is coupled.

The belt lamp 5 and the buzzer 6 are controlled by the seat belt reminder apparatus 1, and gives an alarm for the unfastening of the seat belt to a driver and others. The belt lamp 5 is incorporated in, for example, a combination meter, and the buzzer 6 is incorporated in the seat belt reminder apparatus 1, however, these may be provided at other places as long as the alarm can be recognized by the driver.

Incidentally, in the next description, the seat belt is sometimes simply called a belt, and the belt lamp 5 is sometimes simply called a lamp.

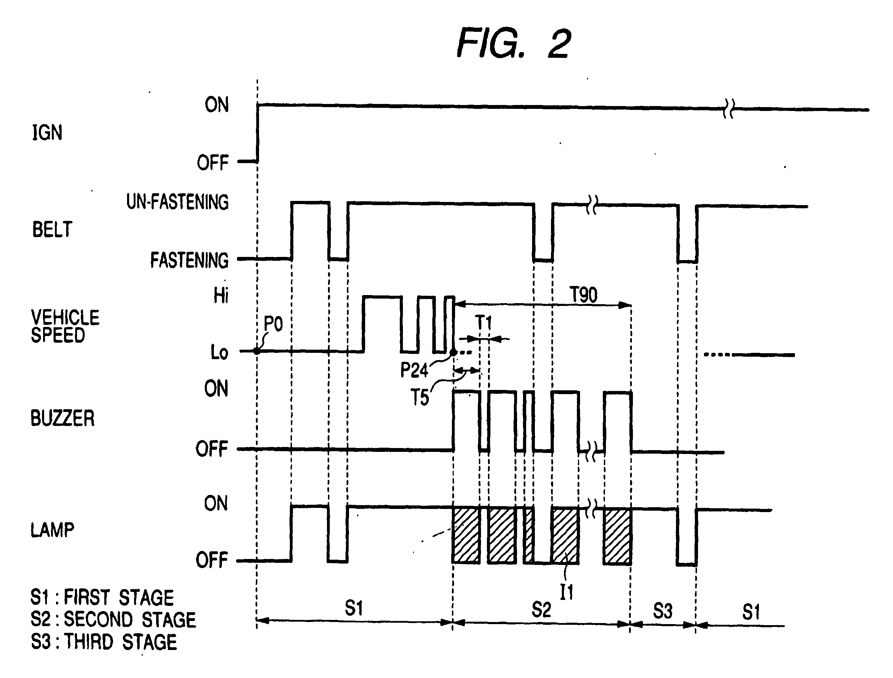

Next, alarm operations performed at the respective alarm stages set in the embodiment of the present invention will be described in brief with reference to Fig. 2. Fig. 2 is a time chart showing basic stage transitions and alarm operations performed in the respective alarm stages according to the embodiment of the present invention.

Incidentally, in Fig. 2, the uppermost time chart indicates whether the ignition switch 2 of Fig. 1 is in an ON state or an OFF state. The time chart lower than that indicates by the seat belt switch 4 whether or not the seat belt is in the fastening state or the unfastening state. Further, the time chart lower than that indicates a pulse waveform made of High and Low corresponding to the vehicle speed from the vehicle speed sensor 3 of Fig. 1. Besides, the time chart lower than the vehicle sensor 3 indicates ON, OFF of the buzzer 6 shown in Fig. 1, and further, the time chart lower than that indicates ON, OFF of the belt lamp 5 shown in Fig. 1.

As shown in Fig. 2, in this embodiment, the alarm stages are set to be three stages, that is, a first stage S1, a second stage S2 and a third stage S3.

The first stage S1 is, as indicated by point P0, from ON of the ignition switch 2 to, as indicated by point P24, a predetermined vehicle speed, for example, 24 km/h or higher. In this first stage S1, the buzzer 6 is OFF, and only the lamp 5 is turned ON and is lit. Incidentally, when the seat belt is fastened in this stage, similarly to the buzzer 6, the lamp 5 is also turned OFF.

In the first stage S1, for example, in the case where the vehicle speed becomes 24 km/h or higher, a transition occurs to the next second stage S2. In this second stage S2, the lamp 5 is turned on and off at a predetermined frequency, and the buzzer 6 is also activated in synchronization with the predetermined frequency. In details, as indicated by T1 in the drawing, a pattern is repeated in which the lamp 5 is repeatedly turned on and off at a high level of 0.2 second and a low level of 0.2 second only in a period T5 (for example, five seconds), and subsequently to this, the lamp 5 is continuously lit only in a period T1 (for example, one second). Further, the buzzer 6 is activated in synchronization with the period T5 and the period T1. That is, the buzzer 6 repeats the pattern of ON of the period T5 and OFF of the period T1. Incidentally, also in this stage, when the seat belt is fastened, both the lamp 5 and the buzzer 6 are turned OFF.

In the second stage S2, in the case where the sum total of the buzzer ON (the total time of the state where the buzzer 6 is ON) becomes a period T90 (for example, 90 seconds) or higher in the drawing, a transition occurs to the next third stage S3. In this third stage S3, similarly to the first stage S1, only the lamp 5 is lit, and when the seat belt is fastened, similarly to the buzzer 6, the lamp 5 is also turned OFF.

As stated above, the plural alarm stages are provided, and the lamp is first lit, and as the degree of the danger increases, the alarm level is gradually raised, and accordingly, the uncomfortable feeling is not given to an operator while halting, and a necessary alarm can be certainly given.

Incidentally, the second stage S2 may be divided more minutely. For example, the second stage S2 may be divided into a first high alarm stage and a second high alarm stage. The transition occurs to the first high alarm switch when the vehicle speed exceeds the above vehicle speed in the first stage S1 and the lamp, together with buzzing, is driven to be turned on and off at a first period. The transition occurs to the second high alarm switch when a predetermined time (for example, 30 seconds) has passed from the first high alarm stage and in which the lamp, together with buzzing, is turned on and off at a second period shorter than the first period. That is, as the degree of the danger increases, the blinking period is made to rise, so that attention to the danger is evoked more certainly. Besides, the sound pressure of the second high alarm stage may be increased from the first high alarm stage. As stated above, by dividing the second stage S2 minutely, it becomes possible to more certainly give the alarm corresponding to the level of the danger.

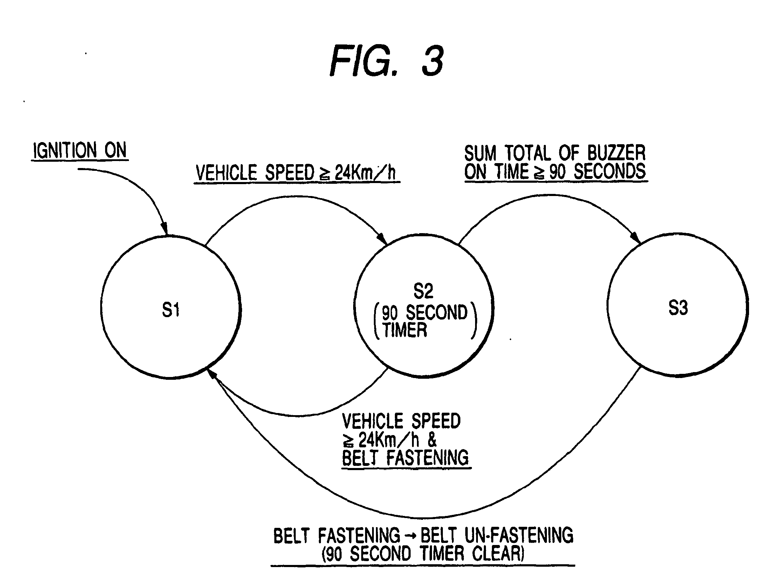

In the above, although the stage transition in an upward direction from the first stage S1 to the third stage S3 has been described, there is actually a stage transition in a downward direction from the third stage S3 to the first stage S1. The respective stages including the stages mentioned above will be described with reference to Figs. 3 to 5.

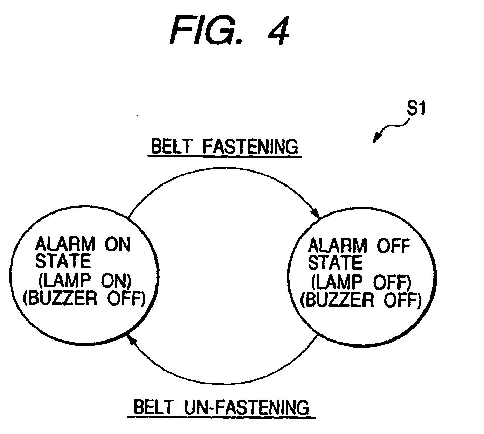

Fig. 3 is the state transition diagram for explaining the state transition between the respective alarm stages of the embodiment of the present invention. Figs. 4 to 6 are state transition diagrams of the alarm operations in the first stage S1, the second stage S2 and the third stage S3, respectively. Incidentally, in Figs. 3 to 6, triggers for the state transitions are underlined, and the respective processing operations are enclosed in brackets.

As shown in Figs. 3 and 4, in the first stage S1 to which the transition occurs by turning ON the ignition switch 2, the transition occurs between the alarm ON state and the alarm OFF state based on whether the belt fastening or belt unfastening. That is, in the alarm ON state (at the time of belt unfastening), the lamp is ON and the buzzer is OFF. On the other hand, in the alarm OFF state (at the time of belt fastening), both the lamp and the buzzer become OFF. In this first stage S1, when the vehicle speed becomes 24 km/h or higher, the transition occurs to the next second stage S2.

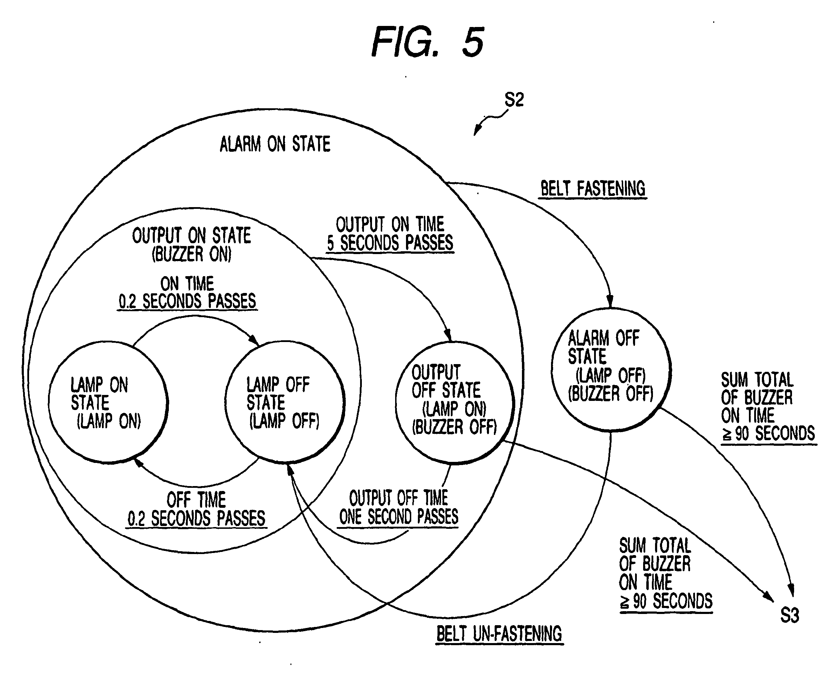

As shown in Figs. 3 and 5, also in the second stage S2, belt fastening and belt unfastening are made triggers, and the transition occurs between the alarm ON state and the alarm OFF state. However, in the alarm ON state (at the time of the belt unfastening), states recited as an output ON state and an output OFF state are repeated at predetermined time intervals. That is, the output ON state continues for five seconds, and when the five seconds have passed, the transition occurs to the output OFF state. The output OFF state continues for one second, and when the one second has passed, the transition occurs to the output ON state. Further, in the output ON state, the lamp ON state and the lamp OFF state are repeated every 0.2 second. The lamp is ON in the lamp ON state, and the lamp is OFF in the lamp OFF state. On the other hand, in the alarm OFF state (at the time of belt fastening), similarly to the other stages, both the lamp and the buzzer are turned OFF. In this second stage S2, when the sum total of the buzzer ON becomes 90 seconds or more (irrespective of the alarm ON state and the alarm OFF state), the transition occurs to the next third stage S3, and when the vehicle speed becomes less than 24 km/h, only in the case of the belt non-fastening state, the transition occurs to the first stage S1. Accordingly, a pause in the buzzer sound expected to occur in the case of traveling at a speed in the vicinity of 24 km/h and in the seat belt unfastening state can be prevented from occurring.

As shown in Figs. 3 and 6, in the third stage S3, although the transition changes to the alarm OFF state by the belt fastening, when it changes to the belt unfastening in the alarm OFF state, the transition changes to the first stage S1. Incidentally, the lamp is ON and the buzzer is OFF in the alarm ON state (at the time of the belt unfastening), and both the lamp and the buzzer become OFF in the alarm OFF state (at the time of the belt fastening).

Incidentally, the above states are named for convenience in description of the operation of this embodiment, and do not limit the present invention. The time chart corresponding to the description using Figs. 3 to 6 is shown in Fig. 2.

As stated above, according to this embodiment, a phenomenon in which an alarm becomes intermittent and which is conceivable in the case of traveling at a speed in the vicinity of a vehicle speed as a reference for switching of the alarm stage, is prevented from occurring, and the uncomfortable feeling is not given to a driver. Of course, at the belt fastening needless time, such as the halting the vehicle, the alarm is not given by the buzzer 6, so that the uncomfortable feeling is not given to the operator. Besides, at the time of low speed driving, only the minimum alarm is given by the belt lamp 5, and as the driving speed and driving time increase and the degree of the danger rises, the belt lamp 5 is turned on and off, or the alarm by the buzzer 6 is given, so that the uncomfortable feeling is made minimum, and the necessary alarm is more effectively given. That is, according to this embodiment, the uncomfortable feeling is not given to the driver, and the alarm corresponding to a situation can be certainly given. As the result, this embodiment assists the manufacture of the vehicles for conforming with various vehicle evaluation standards.

Incidentally, with respect to the alarm method indicated by the first stage S1 and the second stage S2, various variations are conceivable on condition that an alarm level of a subsequent stage is raised from the first stage S1. Besides, the detection of belt unfastening may be applied to the co-driver seat and the rear seat in addition to the driver seat.

## Claims

1. A method for reminding of seat belt fastening, comprising the steps of:
detecting non-fastening state of the seat belt;
providing an audible alarm unit (6) and a visible alarm unit (5);
detecting either vehicle speed or traveling distance and time;
setting a low alarm stage (S1) when only the visible alarm unit (5) is actuated after an engine start and a high alarm stage (S2,S3) when at least the audible alarm unit (6) is actuated;
actuating at least either one of the audible alarm unit (6) or the visible alarm unit (5) in accordance with the alarm stages; and
changing from the low alarm stage (S1) to the high alarm stage (S2,S3) when a vehicle speed reaches a predetermined vehicle speed in the low alarm stage; **characterised by** the step of
converting the high alarm stage (S2,S3) to the low alarm stage (S1) only in the case that the seat belt is in a non-fastening state when the vehicle speed becomes less than the predetermined vehicle speed in the high alarm stage.

2. The method as set forth in claim 1, wherein both the audible alarm unit (6) and the visible alarm unit (5) are actuated in the high alarm stage (S2,S3).

3. The method as set forth in claim 2, wherein the audible alarm unit (6) and the visible alarm unit (5) are actuated synchronously in the high alarm stage (S2,S3).

4. The method as set forth in claim 2, wherein the visible alarm unit (5) is actuated in the low alarm stage (S1);
wherein the high alarm stage (S2,S3) includes a first high alarm stage (S2) and a second high alarm stage (S3);
wherein the low alarm stage (S1) changes to the first high alarm stage (S2) in the case of that the visible alarm unit (5) is turned on and off at a first period when the vehicle speed exceeds the predetermined vehicle speed in the low alarm stage; and
wherein the first high alarm stage (S2) changes to the second high alarm stage (S3) in the case of that the visible alarm unit (5) is turned on and off at a second period shorter than the first period when a predetermined time is passed.

5. The method as set forth in claim 1, wherein:
the visible alarm unit (5) is a lamp; and
the audible alarm unit (6) is a buzzer.

6. A seat belt reminder apparatus, comprising:
a seat belt detector for detecting non-fastering state of the seat belt;
an alarm information detector (12) for detecting either vehicle speed or traveling distance and time;
a setting unit (10) for setting a plurality of alarm stages (S1,S2,S3) on the basis of an alarm information detected by the alarm information detector; and
an alarm unit having an audible alarm unit (6) and a visible alarm unit (5) for driving at least either one of the audible alarm unit or the visible alarm unit in accordance with the alarm stages;
wherein the setting unit (10) sets a low alarm stage (S1) when only the visible alarm unit (5) is actuated after an engine start and a high alarm stage (S2,S3) when at least the audible alarm unit (6) is actuated; and
wherein the low alarm stage (S1) changes to the high alarm stage (S2,S3) when the vehicle speed reaches a predetermined vehicle speed in the low alarm stage; and **characterised in that**
the high alarm stage (S2,S3) changes to the low alarm stage (S1) only in the case that the seat belt is in the non-fastening state when the vehicle speed becomes less than the predetermined vehicle speed in the high alarm stage.

7. The seat belt reminder apparatus as set forth in claim 6, wherein:
the audible alarm unit (6) and the visible alarm unit 5) are actuated synchronously in the high alarm stage.

## Patentansprüche

1. Verfahren zum Erinnern, dass ein Sicherheitsgurt geschlossen werden muss, folgende Schritte umfassend
Bestimmen eines gelösten Zustands des Sicherheitsgurts,
Verwenden einer akustischen Alarmeinheit (6) und einer visuellen Alarmeinheit (5),
Bestimmen entweder der Fahrzeuggeschwindigkeit oder des zurückgelegten Fahrwegs und der Fahrzeit,
Einstellen einer niedrigen Alarmstufe (S1), wenn nur die visuellen Alarmeinheit (5) aktiviert wird, nachdem der Motor gestartet wurde, und einer hohen Alarmstufe (S2, S3), wenn wenigstens die akustische Alarmeinheit (6) aktiviert wird,
Aktivieren wenigstens einer der Alarmeinheiten, nämlich der akustischen Alarmeinheit (6) oder der visuellen Alarmeinheit (5) entsprechend den Alarmstufen, und
Übergang von der niedrigen Alarmstufe (S1) zu der hohen Alarmstufe (S2, S3), wenn die Fahrzeuggeschwindigkeit eine vorbestimmte Fahrzeuggeschwindigkeit in der niedrigen Alarmstufe erreicht,
**gekennzeichnet durch** die Schritte
Umwandeln der hohen Alarmstufe (S2, S3) in die niedrige Alarmstufe (S1), nur wenn der Sicherheitsgurt sich im gelösten Zustand befindet und die Fahrzeuggeschwindigkeit unter die vorbestimmte Fahrzeuggeschwindigkeit in der hohen Alarmstufe abfällt.

2. Verfahren gemäß Anspruch 1, wobei sowohl die akustische Alarmeinheit (6) und die visuelle Alarmeinheit (5) in der hohen Alarmstufe (S2, S3) aktiviert werden.

3. Verfahren gemäß Anspruch 2, wobei die akustische Alarmeinheit (6) und die visuelle Alarmeinheit (5) in der hohen Alarmstufe (S2, S3) synchron aktiviert werden.

4. Verfahren gemäß Anspruch 2,
wobei die visuelle Alarmeinheit (5) in der niedrigen Alarmstufe (S1) aktiviert wird,
wobei die hohe Alarmstufe (S2, S3) eine erste hohe Alarmstufe (S2) und eine zweite hohe Alarmstufe (S3) umfasst,
wobei die niedrige Alarmstufe (S1) zur ersten hohen Alarmstufe (S2) abgeändert wird, wenn die visuelle Alarmeinheit (5) in einer ersten Periode an- und ausgeschaltet wird, wenn die Fahrzeuggeschwindigkeit die vorbestimmte Fahrzeuggeschwindigkeit in der niedrigen Alarmstufe überschreitet, und
wobei die erste hohe Alarmstufe (S2) zur zweiten hohen Alarmstufe (S3) abgeändert wird, wenn die visuelle Alarmeinheit (5) in einer zweiten Periode an- und ausgeschaltet wird, die kürzer als die erste Periode ist, wenn ein vorbestimmter Zeitraum vergangen ist.

5. Verfahren gemäß Anspruch 1, wobei
die visuelle Alarmeinheit (5) eine Lampe ist und
die akustische Alarmeinheit (6) ein Summer ist.

6. Schließerinnerungsvorrichtung für einen Sicherheitsgurt umfassend
einen Sicherheitsgurtdetektor zum Bestimmen eines gelösten Zustands des Sicherheitsgurts,
einen Alarminformationsdetektor (12) zum Bestimmen entweder der Fahrzeuggeschwindigkeit oder des Fahrwegs und der Fahrzeit,
eine Steuereinheit (10) zum Einstellen mehrerer Alarmstufen (S1, S2, S3) auf der Basis einer Alarminformation, die von dem Alarminformationsdetektor bestimmt wird, und
eine Alarmeinheit, die eine akustische Alarmeinheit (6) und eine visuelle Alarmeinheit (5) zum Betreiben wenigstens einer der Alarmeinheiten, nämlich der akustischen Alarmeinheit und der visuellen Alarmeinheit, entsprechend den Alarmstufen aufweist,
wobei die Steuereinheit (1) eine niedrige Alarmstufe (S1) einstellt, wenn nur die visuelle Alarmeinheit (5) aktiviert ist, nachdem der Motor gestartet wurde, und eine hohe Alarmstufe (S2, S3) einstellt, wenn wenigstens die akustische Alarmstufe (6) aktiviert ist, und
wobei die niedrige Alarmstufe (S1) zur hohen Alarmstufe (S2, S3) wechselt, wenn die Fahrzeuggeschwindigkeit eine vorbestimmte Fahrzeuggeschwindigkeit in der niedrigen Alarmstufe überschreitet, und
**gekennzeichnet dadurch,**
**dass** die hohe Alarmstufe (S2, S3) zur niedrigen Alarmstufe (S1) wechselt, nur wenn der Sicherheitsgurt sich im gelösten Zustand befindet und die Fahrzeuggeschwindigkeit unter die vorbestimmte Fahrzeuggeschwindigkeit in der hohen Alarmstufe absinkt.

7. Schließerinnerungsvorrichtung für einen Sicherheitsgurt gemäß Anspruch 6,
wobei die akustische Alarmeinheit (6) und die visuelle Alarmeinheit (5) in der hohen Alarmstufe synchron aktiviert werden.

## Revendications

1. Procédé pour rappeler la fixation d'une ceinture de sécurité, comprenant les états de :
détection d'un état de non-fixation de la ceinture de la sécurité ;
fourniture d'une unité d'alarme audible (6) et d'une unité d'alarme visible (5) ;
détection soit de la vitesse de véhicule soit de la distance et de la durée de déplacement ;
établissement d'un état d'alarme faible (S1) lorsque seule l'unité d'alarme visible est actionnée après un démarrage de moteur et d'un état d'alarme élevé (S2, S3) lorsqu'au moins une unité d'alarme audible (6) est actionnée :
activation d'au moins l'une des unités d'alarme audible (6) et visible (5) selon les états d'alarme ; et
passage de l'état d'alarme faible (S1) à l'état d'alarme élevé (S2, S3) lorsqu'un véhicule atteint une vitesse de véhicule prédéterminée pour l'état d'alarme faible ;
**caractérisé par** l'état de
passage de l'état d'alarme élevé (S2, S3) à l'état d'alarme faible (S1) seulement dans le cas où la ceinture de sécurité est dans un état de non-fixation lorsque la vitesse de véhicule devient inférieure à la vitesse de véhicule prédéterminée pour l'état d'alarme élevé.

2. Procédé selon la revendication 1, dans lequel l'unité d'alarme audible (6) et l'unité d'alarme visible (5) sont toutes deux activées à l'état d'alarme élevé (S2, S3).

3. Procédé selon la revendication 2, dans lequel l'unité d'alarme audible (6) et l'unité d'alarme visible (5) sont activées de façon synchrone à l'état d'alarme élevé (S2, S3).

4. Procédé selon la revendication 2, dans lequel l'unité d'alarme visible (5) est activée à l'état d'alarme faible (S1) ;
dans lequel l'état d'alarme élevé (S2, S3) comprend un premier état d'alarme élevé (S2) et un second état d'alarme élevé (S3) ;
dans lequel l'état d'alarme faible (S1) passe au premier état d'alarme élevé (S2) dans le cas où l'unité d'alarme visible (5) est activée et désactivée pendant une première période lorsque la vitesse de véhicule dépasse la vitesse de véhicule prédéterminée à l'état d'alarme faible ; et
dans lequel le premier état d'alarme élevé (S2) passe au second état d'alarme élevé (S3) dans le cas où l'unité d'alarme visible (5) est activée et désactivée pendant une seconde période plus courte que la première période lorsqu'un temps prédéterminé s'est écoulé.

5. Procédé selon la revendication 1, dans lequel :
l'unité d'alarme visible (5) est un voyant ; et
l'unité d'alarme audible (6) est un vibreur.

6. Dispositif de rappel de ceinture de sécurité, comprenant :
un détecteur de ceinture de sécurité pour détecter un état de non-fixation de la ceinture de sécurité ;
un détecteur d'informations d'alarme (12) pour détecter soit une vitesse de véhicule soit une distance et une durée de déplacement ;
une unité (10) pour établir une pluralité d'états d'alarme (S1, S2, S3) sur la base des informations d'alarme détectées par le détecteur d'informations d'alarme ; et
une unité d'alarme ayant une unité d'alarme audible (6) et une unité d'alarme visible (5) pour commander au moins l'une des unités d'alarme audible et d'alarme visible selon les états d'alarme ;
dans lequel l'unité (10) d'établissement d'états n'établit un état d'alarme faible (S1) que lorsque l'unité d'alarme visible (5) est activée après un démarrage de moteur et un état d'alarme élevé (S2, S3) lorsque au moins une unité d'alarme audible (6) est activée ; et
dans lequel l'état d'alarme (S1) passe à l'état d'alarme élevé (S2, S3) lorsque la vitesse de véhicule atteint une vitesse de véhicule prédéterminée à l'état d'alarme faible ; et
**caractérisé en ce que**
l'état d'alarme élevé (S2, S3) ne passe à l'état d'alarme faible (S1) que dans le cas où la ceinture de sécurité est à l'état de non-fixation lorsque la vitesse de véhicule devient inférieure à la vitesse de véhicule prédéterminée pour l'état d'alarme élevé.

7. Dispositif de rappel de ceinture de sécurité selon la revendication 6, dans lequel :
l'unité d'alarme audible (6) et l'unité d'alarme visible (5) sont activées de façon synchrone à l'état d'alarme élevé.
